# EUROPEAN PATENT SPECIFICATION

(11) **EP 1 284 577 B1**
(45) Date of publication and mention of the grant of the patent: **03.12.2008**
(21) Application number: 01402124.0
(22) Date of filing: 06.08.2001
(51) Int. Cl.: H04N 7/173

(54) **Method and system for providing interactive services to digital television sets via a broadcast channel and telephone network**
Verfahren und System zum Bereitstellen von interaktiven Diensten für digitale Fernsehempfänger über einen Rundfunkkanal und ein Telefonnetz
Procédé et système pour fournir des services interactifs à des récepteurs télévision numérique via un canal de diffusion et un réseau téléphonique

(43) Date of publication of application: 19.02.2003
(73) Proprietor: Accenture Global Services GmbH, 8200 Schaffhausen (CH)
(72) Inventor: Mercier-James, Laurent, 92340 Sevres (FR)
(74) Representative: de Beaumont, Michel

(56) References cited:
- WO-A-00/38430
- US-A- 6 032 119
- US-A1- 2001 003 823
- PROFFIT B.: 'INTERCAST BRINGS THE WEB TO TV. A NEW TECHNOLOGY MAY CHANGE THE WAY YOU WATCH TELEVISION' PC MAGAZINE - US EDITION 21 January 1997, pages 203 - 204, XP002053914
- TANAKA K. ET AL: 'Back to the TV: information visualization interfaces based on TV-program metaphors' PROCEEDINGS OF INTERNATIONAL CONFERENCE ON MULTIMEDIA AND EXPO vol. 3, 30 July 2000, PISCATAWAY, NJ, USA, pages 1229 - 1232, XP010512728
- SHIROTA Y. ET AL: 'A TV program generation system using digest video scenes and a scripting markup language' SYSTEM SCIENCES, 2001. PROCEEDINGS OF THE 34TH ANNUAL HAWAII INTERNATIONAL CONFERENCE ON JANUARY 3-6, 2001 03 January 2001, PISCATAWAY, NJ, USA, pages 1639 - 1646, XP010549769

## Description

### FIELD OF THE INVENTION

The invention relates to a method for providing interactive services from server equipment to a digital television set. It relates also to server equipment implementing this method.

### BACKGROUND OF THE INVENTION

Millions of French, European, and American households are currently equipped with first generation (G1) set-top boxes - or terminals - for accessing the offer of digital TV (DTV). This offer is provided by DTV operators like the Canal+ Group® - CanalSatellite® in France -, TPS® in France or BskyB® in the UK. The DTV operator is a technical and commercial operator that proposes classically a bouquet of channels and services, using digital TV technologies and a digital TV platform. The broadcast takes place via high-speed satellite, cable or terrestrial radio telecom link, from the DTV operator to the customers, allowing sending of large multimedia content such as TV and radio channels.

Typically, the terminal is the property of the DTV operator. The terminal receives the broadcast DTV signals or radio channels, decodes them and provides the TV set to which it is connected with the corresponding video and audio signals.

Further, the terminal allows interactive services that are implemented through applications downloaded into the terminal. Such interactive services are delivered by the DTV operators or by content providers. Therefore, the terminal is designed similarly to a computer. It has a microprocessor (CPU) managing a video memory for the images to be displayed on the TV set. The video memory stores the TV images - i.e. the broadcast TV channel images - and OSD (on-screen display) data - i.e. data corresponding to letters, figures or graphical objects to be displayed. Similarly, the microprocessor manages an audio memory. The terminal comprises also a RAM memory for storing programs to be run by the microprocessor or other data to be used by it. Further, the terminal comprises a modem for linking it to the standard analogue telephone network, thus allowing two-way communication. It further comprises an operating system (OS) and middleware, i.e. an extension to the OS of the terminal to handle the interactive applications.

However, G1 terminals have several drawbacks as regards the implementation of interactive services.

A first drawback consists in the fact that the middleware of the terminal is specific to the DTV operators. For instance, there exists a middleware called MediaHighway® which is a product from the Canal+ Technologies company and another one called OpenTV® which is a product from the OpenTV Inc. company. Thus, interactive service providers have to master each middleware in order to develop interactive services for a maximum of potential users.

A second drawback consists in the fact that the existing middlewares are complex and difficult to master. Indeed, middlewares like MediaHighway® and OpenTV® are based on a third generation language programming and a client-server architecture. Thus, in order to show a screen on TV, the programmer must code the detailed construction of all the components of the elements of the picture to be displayed on the screen. It results that the coding of the screens is a monotonous process. Further, each screen to be displayed corresponds to a long code. Thus, the modem transmission of the corresponding data and the processing by the terminal take too much time which are incompatible for interactive services to be of comfortable use.

Due to the complexity and the specificity of these languages, only few people in the world have sufficient knowledge for producing interactive services therewith.

A third drawback consists in the fact that the G1 terminal resources are less powerful than e.g. existing PC computers or similar used for accessing the Internet by means of a classical telephone line :
- the available memory (RAM) shows about 100 times less capacity: 200 Kbytes - 2 Mbytes instead of 20-200 Mbytes;
- the CPU is about 10 times less powerful as regards the number of operation performed per time unit;
- the modem speed is about 50 times slower: about 1 kbps (V23 modem) instead of about 50 kbps (V90 modem).

Due to these drawbacks, only few interactive services have been implemented on TV so far.

A second generation of DTV platforms and terminals (G2) is already planned. As far as the interactive services and technical features are concerned, this generation will implement a HTML (Hyper Text Markup Language) browser directly into the terminal, therefore allowing the development of services in HTML and Javascript. This will tremendously ease the development of interactive services. However, this generation will appear in one or two years from now, and will only fully replace the G1 terminals already deployed in several years time.

The weak resources G1 terminal does not give the possibility of implementing a HTML browser with a view to providing users with interactive services in a satisfactorily manner. Indeed, the modem speed is too low and the CPU not sufficiently powerful for decoding and displaying the corresponding screens within acceptable time limits. Typically, the terminal would require about two minutes for interpreting and displaying a full HTML screen. Such a time period is not acceptable for the users of interactive services. Further, the available RAM memory may appear to be too low for allowing a HTML page to be stored beside the browser itself, especially if the HTML pages have a large content.

US Patent Application 2001/0003823 relates to a system comprising a server that provides internet services to a client. A transcoder is provided for automatically revising the code of retrieved Web documents. Transcoding is described as involving rewriting an HTML document to remove bugs and quirks, or converting documents from GIF to JPEG image formats.

Publication titled "Intercast brings the Web to TV", Brian Proffit, PC Magazine January 1997, describes a system whereby information, and in particular hyper-linked pages, are transmitted as part of a standard television signal. This system also includes an integrated Web-browser which download pages from the Internet in response to invoking one of the hyperlinks.

Publication titled "Back to the TV: Information Visualisation Interfaces Based on TV-Program Metaphors", Katsumi Tanaka et al., IEEE, describes automatic translation of Web pages into TVML scripts.

Publication titled "A TV Program Generation System Using Digest Video Scenes and a Scripting Markup Language", Yukari Shirota et al., IEEE, describes a system that allows TV programs to be dynamically generated for individual viewers.

### SUMMARY OF THE INVENTION

The current DTV households represent a tremendous potential for Business-to-Consumer interactive services from content providers:
- millions of potential users of interactive and eCommerce services are already equipped and trained in the utilization of the terminal;
- this terminal has a central position in the household, and is used several hours a day;
- technical platforms and infrastructures are already in place and funded by the market of the classic TV content (TV channels);
- the life time of this first generation of set-top boxes will last for several additional years;
- interactive DTV is a way to access a population that appears to be complementary to Internet users.

Therefore, an object of the present invention is to propose a solution to rapidly and easily deploy interactive services for existing DTV terminals, i.e. G1 DTV terminals. In particular, the invention aims to fully implement on the DTV sets the three level of interactivity as follows:
- publishing: consists in broadcast of pages, i.e. offering TV users the possibility to access pages of e.g. magazines, news;
- interaction: consists in broadcast of pages that TV users may watch, and return from TV users to the service provider of information provided by the TV user with the help of e.g. the remote control of the terminal; this corresponds to services such as lottery, quiz, interactive ads services;
- transaction: consists in personalized data exchange between the TV user and the service provider, e.g. home shopping with access to articles, home-banking services, brokers, ticketing, customer self-care, e-mail, interactive TV portal.

Another object of the invention is to allow the providing of interactive services comfortable to user, in particular, which enable a quick display of screens to prevent the user from being bored and discouraging him to use the interactive services.

A further object of the invention is to enable service providers to develop interactive services for the different kinds of existing terminals, independently from the corresponding middleware.

These objects are achieved with the method according to claim 1 and server equipment according to claim 10. Preferred embodiments are defined in the dependent claims.

The use of a content description language for sending the pages to the DTV is particularly advantageous because it gives the possibility to design the interactive service pages for DTVs having terminals with different OS and middlewares, without having regard to these differences. Indeed, each terminal need simply to be loaded with a program specific to the type of terminal, this program interpreting the received pages.

Further, the invention gives the ability to function on the existing digital and interactive TV platforms, with a low power CPU, low memory and low modem speed set-top boxes by using a content description language having a sufficient compact syntax. Content providers can address millions of households and customers today, and do not have to wait for future platforms. At the same time, they can already use the web-based technologies of these future platforms to speed up projects, lower development costs and get a maximum flexibility for their services.

It is advantageous that the first language is also a content description language. Thus, service providers may easily develop interactive service pages by concentrating only on the content of the pages, without being obliged to take into consideration the specificity of the OS and middleware of the terminals. Further, it may be advantageously a well-known content description language such as HTML so that service providers are already used to design pages in this language.

The conversion of the pages in the first language - especially if the first language is also a content description language - into the content description languages preferably occurs without loss of information concerning the visual and interactive content of the pages. In case the conversion concerns only a subset of tags or instructions of the first language, the conversion without loss principle applies preferably to this whole subset of tags or instructions, the non-converted tags or instructions may simply be ignored.

According to an embodiment, the converted page is more compact than the page coded in the first language. This is especially interesting in case the non-converted page could not be processed by the terminal of the DTV due to its low resources, e.g. insufficient RAM memory. The content description language - into which the page is converted - is designed to provide a converted page being more compact than the non-converted page, thereby allowing its interpretation by the terminal of the DTV despite its low resources. Independently from this aspect, the more-compact converted page allows in any case a faster transmission from the server equipment to the DTV compared to the not-converted page.

Further, the invention allows to take advantage of the databases and contents currently feeding web sites and the existing infrastructures of web type servers and the Internet standards (HTML, HTTP, TCP/IP, WML, ...) which are well known. In other words, the invention allows the development of interactive services on DTV, simply by developing HTML - or similar - pages using traditional web technologies and any web-related tool. Thus, the invention allows the deployment of interactive services on multiple existing interactive TV platforms that are not HTML enabled, and that are using proprietary technologies such as OpenTV® and MediaHighway®.

These possibilities are provided without hardware change of the DTV terminals.

Due to the invention, it is no longer required for service providers to support development in proprietary and difficult interactive TV technologies such as OpenTV® or MediaHighway® or to adapt contents and transactions to proprietary technologies or formats. The same interactive service application may be received at DTV terminals of different types without the necessity to rewrite it specifically for each; no adaptation to any proprietary format is necessary.

The invention allows large functional support, and access to real-time and unlimited contents on the back channel. The services may easily be personalized, and traffic measurements (ex. number of "hits") are easy to perform by using traditional web tools. Further, an unequaled flexibility of the implementation and maintenance of the content of the interactive service pages is provided.

Furthermore, the migration of the interactive services implemented according to the invention towards the G2 terminals which will exist in the future is very easy. Indeed, the G2 terminals will be HTML enabled. As the interactive services according to the invention may be developed in HTML, a web site designed for the TV according to the invention can be directly accessed by G2 terminals.

### BRIEF DESCRIPTION OF THE DRAWINGS

Figure 1 is a diagram providing a global view of the technical architecture of a preferred embodiment of the invention.
Figures 2, 3 and 4 show - in black and white - an example of interactive pages displayed on a DTV which were created according to the invention.

### DETAILED DESCRIPTION OF THE INVENTION

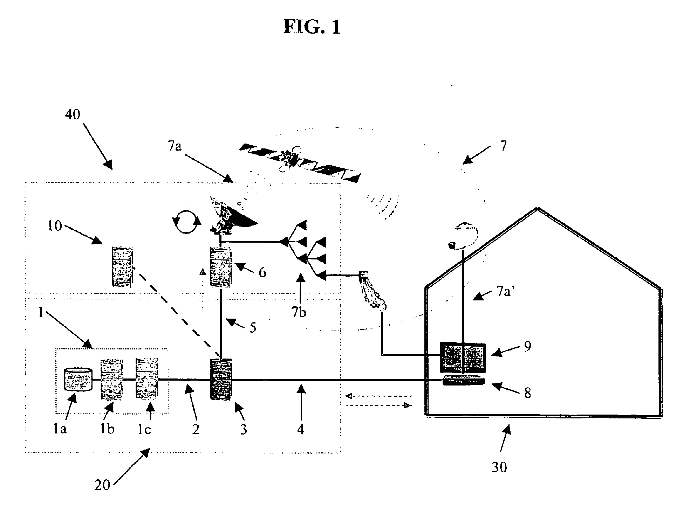

Fig. 1 shows an overview of the infrastructure for implementing interactive services according to an embodiment of the invention.

Block 20 corresponds to the equipment used by the content provider for supplying interactive services while block 40 corresponds to the equipment of the DTV operator. Block 30 corresponds to a household equipped with a DTV.

The equipment of the content provider comprises web server equipment 1 for providing web pages for the Internet. Web server equipment 1 is of a conventional type and is well known in the prior art. Typically, web server equipment 1 may comprise a central system and databases 1a linked to an application server 1b which is in turn linked to a web server 1c.

Web server equipment 1 - more precisely, web server 1c - is in communication with a further server 3. This communication link 2 may be a classical LAN (Local Area Network) or WAN (Wide Area Network) link.

Server 3 has a communication link 5 with the already-existing broadcast platform of the DTV operator. The broadcast platform is conventionally used for broadcasting the TV and radio channels and other data towards the DTV terminals of the users. Communication link 5 may be a classical LAN (Local Area Network) or WAN (Wide Area Network). The broadcast platform is illustrated in the form of a broadcast server 6 managing conventionally the DVB (Digital Video Broadcast) /MPEG-2 (Moving Picture Experts Group) protocol carousel for DTV broadcasting e.g. via satellite 7a and/or cable network 7b. It allows only a one-way communication from the DTV operator towards the DTV terminals. This DTV broadcast path is usually called the broadcast channel.

The broadcast is received at the user by a DTV terminal 8 which is connected to his TV set 9. Terminal 8 is of the G1 type already existing in the prior art - which is not HTML enabled - and corresponding to the DTV platform 40.

Further, terminal 8 and server 3 of the DTV operator are able to communicate with each other via a WAN using generally a standard telephone line 4. In other words, this communication link uses the modem of terminal 8. It uses conventionally the V22, V22bis or V23 modem protocols and the TCP/IP, X25-29 or Teletel WAN protocols. This two-way communication line 4 is usually called the back channel.

According to this embodiment, the web server equipment 1 provides web pages in a usual way to server 3. The web pages may be conventionally expressed in HTML and provided to server 3 through network link 2 implementing conventionally the TCP/IP protocol, using more particularly HTTP (HyperText Transfer Protocol) or HTTPS (HyperText Transfer Protocol Secured).

Server 3 ensures a first application that we will designate as the Gateway. The Gateway allows the link between the web server equipment 1 and terminal 8. Therefore, the Gateway receives the HTML web pages from web server equipment 1 and converts them into another content description language having the specificity of showing a more compact syntax. In other words, the file of the translated web page will have fewer bytes than the HTML version of the corresponding web page. A content description language is to be understood as a means to express texts, figures, graphical objects, or images with associated properties (ex. size, colors) and behavior (ex. selectable list of text labels, active button). This content description language will be designated as TVML and the converted web pages will be designated as TVML pages in the following.

The Gateway transmits the TVML pages to the DTV terminal 8, either via back channel 4 or broadcast channel 7.

DTV terminal 8 is loaded with a program that we will designate as the Browser. The Browser interprets the TVML pages that are received either from broadcast channel 7 or back channel 4 and execute them with the help of the OS and/or the middleware of terminal 8. Thus, the Browser ensures the display of the pages on the TV set, manages the user's navigation on the TV screen and the data entry by the users. Further, the Browser sends requests to the Gateway via back channel 4.

The Gateway receives the requests sent by terminal 8 via back channel 4 and converts them to Internet requests - e.g. HTTP or similar - for sending them to web server equipment 1.

The Gateway may be developed e.g. in the C language and run on a Windows 2000® platform or a Unix® platform.

Beside the Gateway application, server 3 ensures a second application that we will designate as the Proxy. A part of the content of the interactive services on DTV is to be broadcast. In order to do so, the content of the TVML pages is adapted to the broadcast channel as well as to terminal 8. This management is performed by the Proxy. The Proxy may handle the conversion of background images and slice images e.g. in classic Internet or computer formats like the JPEG (Joint Photographic Experts Group) format into MPEG2 format and conversion of icons and GIF images to pixmaps. The Proxy ensures the injection of these images and the TVML pages into the MPEG transport streams by selecting an appropriate DVB / MPEG signaling scheme. This application may be developed e.g. in C language and run on a Windows2000® platform or a Unix® platform.

We will now describe more in detail the TVML language.

The TVML is preferably a markup language dedicated to describe the content and features of interactive services which are suitable for the existing G1 DTV platforms and their terminals, taking into account the constraints of the G 1 terminals.

Typically, TVML pages may include all components required for the graphical user interface on the DTV set: texts, images, graphic objects, entry fields, menus, hyperlinks, etc., combined with a sound track or a video, thereby taking full advantage of the potential of the G1 terminal 8.

Thus, the TVML language may classically include:
- tags to describe:
   - the graphic objects to be shown on TV;
   - their properties (ex. color, size, position, ...);
   - their behavior (ex. hyperlink to another screen, alphanumeric entry field...);
- expressions to describe the requests from terminal 8 to the Gateway.

For purpose of illustration, the TVML language may have tags and expressions to support the following graphic components:
- texts with management of indents, carriage return, sizes, line spacing, left, right or center alignment, etc.;
- rectangles being either full, framed or 3D framed, etc.;
- images as for instance background images, slice pictures (portions of background images), pixmaps;
- entry fields for numeric, alphanumeric or date type, with alphabetic scroll and virtual keyboard in connection with the existing remote control of terminal 8;
- numeric and hidden entry fields for e.g. personal code, parental code, bank smart card code;
- entry fields with predefined alphanumeric values (list of choices);
- list of choices displayed on several lines, with possible vertical scrolling
- screens as pop-up windows.

The TVML language may also manage advantageously the following resources, properties, effects or behaviors:
- color management like the palette, background and foreground colors, transparency and semi-transparency;
- absolute and relative positioning, based on a moveable cursor;
- roll-over feature for e.g. displaying on the TV screen an information-bubble, texts, pixmaps and images (slice pictures) when the navigation pointer on the TV screen rolls-over or a focus locates on hyperlinks, entry fields or lists of choices;
- groups of objects management allowing e.g. the display, hiding or deletion of grouped objects or changing from a screen to the next one by deleting given objects selectively;
- resources pre-load such as a controllable cache for the images;
- management of a user session context such as a client or article number, resulting from the navigation of the user, and passed in the context from one page to an other in order to fulfill a transaction ;
- hyperlink features such as:
   - standard hyperlinks (highlighted by a navigation pointer or a focus the appearance of which may be modified),
   - buttons to submit or reset forms,
   - hyperlinks that are automatically activated (when reached by the focus or the navigation pointer),
   - active keys that may be associated to hyperlinks;
- virtual keyboard allowing alphanumeric data entry by the user by using e.g. the standard remote control of terminal 8 which usually does not have an alphanumeric pad, but only a numeric pad and arrows and OK keys. Thus, the TVML pages including alphanumeric entry fields may declare the display of a virtual keyboard at a given position on the screen, and in given colors. This virtual keyboard is shown when the user enters data edit mode in an alphanumeric entry field.
- animation management:
   - animation when requests sent to the Gateway are in progress;
   - timing, automatic transitions between screens;
   - blinking, moving and scrolling of objects;
- synchronization management:
   - display of a screen at a given time, between two instants, allowing for example to show a page during a TV advertisement;
   - wait for a given duration for e.g. displaying a subsequent screen automatically after a given time;
- sound and video management:
   - selection of a video or a sound stream for example to get to a given TV channel;
   - display of a scale to change the sound volume (horizontal or vertical meter);
- broadcast channel management: address for selecting screens and multimedia resources available on the broadcast channel: screen descriptions, images, pixmaps, videos, sound tracks;
- back channel management:
   - implicit connection for hyperlinks to the web server equipment 1 via the Gateway;
   - communication session maintained active over any duration and data exchanges in the both directions;
   - allowing transmission only of differences between two consecutive TVML pages in order to lower the transmission time of the pages;
   - support of various WAN communication protocols.

The primitives of the TVML language are designed to have a very short syntax length. Thus, the file of a TVML page may have significantly fewer bytes than the HTML version of the corresponding web page. It may easily be designed so as to get files showing about 10% of the bytes with respect to the corresponding HTML file. Table 1 provides examples of the TVML language primitives. As a result, the TVML pages can be transmitted very quickly via back channel 4 in comparison to the corresponding HTML file. Thus, the display on the TV screen of two successive pages received via back channel 4 can be performed in a few seconds instead of lasting more than one minute. Thus, the display time appears to be acceptable for the user wishing to benefit from the interactive services.

**TABLE 1**

| **Primitive** | **TVML Version** <..> are replaced with codes of the corresponding feature |
|---|---|
| Colors selection | C<foreground color index><background color index>\| |
| Font size selection | F<size code>\| |
| Rectangle with outset-style 3D border | RW<XX><YY><WW><HH>\| |
| Text with frame in a given color | F<C>_<string>\| |
| Text with frame in a given color, at a given position | <XX><YY>F<C>_<string>l |
| Dialogue window with OK / Cancel options | MC_<Text>_O<URL1 >_C<URL2>\| |

We will now describe the Browser software more in detail. The TVML pages are browsed by the Browser offering similar function to an Internet browser like Microsoft Internet Explorer® or Netscape Navigator®.

From the link to the interactive service, or from any screen in the interactive service, the user requests a new TVML page (either broadcast or sent by modem) by selecting e.g. a button on the screen with the help of the remote control of terminal 8

The Browser reads the address of the requested TVML page. If it corresponds to a TVML page provided through broadcast channel 7, the Browser selects the corresponding address of the broadcast channel and receives the corresponding TVML page. If not, the Browser sends a request via back channel 4 and receives in return the corresponding TVML page.

This TVML page may be parsed as follows. The TVML page is parsed character by character. When an end of tag character is found, a new TVML object has been found, and hence, this object is sent to the interpretation script. Parsing goes on until there is no more data available.

Each TVML object may be interpreted as follows. The TVML object is routed to its processing script by a filter. The object processing script creates a new OS structure and/or middleware structure for the current object, with the properties corresponding to the TVML data. Thus, the TVML object is displayed on the TV screen. Interpretation goes on until the last object of the TVML page.

The Browser may calculate a navigation to determine the ways to move from an active object (e.g. hyperlink or entry fields) to another.

The user may interact with the browser as follows. The user may navigate on every focusable area of the screen (e.g. hyperlinks or entry fields) with e.g. the arrow keys of the remote control of terminal 8. The user may navigate from a page to another, by enabling hyperlinks using e.g. the OK key of the remote control of terminal 8, or shortcut keys that may be associated to hyperlinks.

The user may enter data in edit mode in an entry field or validate the entry by pressing e.g. the OK key of the remote control when focusing this entry field. When in edit mode, the arrows keys and the digits on the remote control allow to enter digits or letters and correct the entry. As the remote control generally has no alphabetic keys, alphanumeric data may be entered with the remote control with the help of a virtual keyboard feature similar to the virtual keyboard conventionally implemented in telephone sets. This way, the user can fill in an entire form composed of input fields, choice lists, check boxes, ... and submit it, almost the same way as a form in HTML on a PC computer.

When a hyperlink is selected, the Browser checks if the corresponding address corresponds to a broadcast channel address; if yes, it selects it on the broadcast channel and receives the corresponding TVML. If not, it sends a request to web server equipment 1 via back channel 4 through the Gateway. Similarly, if the user selects a submit button, the Browser sends a request to web server equipment 1 via back channel 4 through the Gateway. The request sent via back channel 4 is coded in TVML language, and translated into a standard HTTP request by the Gateway in order to send it to the web server equipment 1. The request may advantageously comprise the reference of the hyperlink in TVML which is translated by the Gateway into the corresponding URL (Uniform Resource Locator) for the web server equipment 1. Similarly, if the TVML page correspond to a form, and if a submit link is validated by the user, the entered data are also sent towards the web server equipment 1 via the Gateway.

As regards the conversion of HTML pages into TVML pages that is operated by the Gateway, the principles may be the following.

The TVML language may comprise a set of tags which is more limited than the possibility offered by the HTML language. Therefore, the web pages of web server equipment 1 which are designed for the interactive service on DTV 9 are preferably designed by using only the subset of HTML corresponding to all the possible tags of the TVML language. More precisely, it may be a subset of HTML - e.g. HTML 3.2 and HTML 4.0 - including CSS 1 (Cascading Style Sheet) and CSS2 and Javascript to cover the features of TVML. However, the tags of the HTML language which are converted to TVML are preferably fully converted, i.e. the TVML tags provide all the functions corresponding to the converted HTML tags.

Further, a few extensions may be designed to complete these standards in order to cover specific features of TVML. They concern mainly features that are specific to the TV context like the virtual keyboard, the volume control, or the transparency of a graphical object.

Thus, the Gateway ensures the conversion from this subset of HTML which is completed with some specific extensions, so that all the TVML language possibilities are covered. In case the web pages contain HTML tags which do not make up part of this completed HTML subset, these tags may simply be ignored by the Gateway during the conversion-to-TVML operation.

On the other hand, the interface between the Gateway and the web server equipment 1 covers preferably the full scope of HTTP and HTTPS over TCP/IP.

Table 2 provides examples of possible correspondence and the translation rules between the TVML language primitives and standard HTML / Javascript. As can be seen, the length of the TVML syntax is very short in comparison to the corresponding HTML / Javascript syntax.

**TABLE 2**

| **Primitive** | **TVML Version** | **HTML** / **Javascript Version** |
|---|---|---|
| Rectangle with outset-style 3D border | RW<XX><YY><WW><HH>\| | <table style="position: absolute; left: <X>; top: <Y>" width="<W>" height="<H>"> <td style="border-style: outset"> ... </table> |
| Text with frame in a given color | <XX><YY>F<C>_<string>\| | <p style="position: absolute; left: <X>; top: <Y>; border-style: solid; border-color: <color C>"> <string> </p> |
| Dialogue window with OK / Cancel options | MC_<Text>_O<URL1>_C<URL2>\| | <script type="text/javascript"> if (confirm("<Text>") = 1) location=<URL1>; else location=<URL2>; </script> |

Table 3 shows two examples of extensions to the standard HTML to support TVML features specific to the TV environment. Here again can be seen that the length of the TVML syntax is very short in comparison to the corresponding HTML /Javascript.

In addition to the syntax compression provided by the TVML language for the screen descriptions and the requests, the interactive service may be speeded up by the following. When accessing the TVML pages of the interactive service via back channel 4, the Gateway sends only the differences between the consecutive screens. This optimization saves transmission time as well as memory and processing time in terminal 4 for decoding and displaying the content. This optimization may be designed in the following way. The Gateway stores a session context for each user connected with the content of the last accessed page or screen. When a new screen is requested, the Gateway identifies the differences of the consecutive screens, based on the comparison of the lists of the TVML objects in the two consecutive screens. The Gateway sends the TVML description of the new objects to be displayed, as well as TVML commands to delete the objects that were in the previous screen and that are

**TABLE 3**

| **Primitive** | **TVML Version)** | **HTML Version** |
|---|---|---|
| Text object with transparency or semi-transparency over background image or video | C15\|FL\|T100200C300F6 _Text to display\| (The color palette is defined so that the color which index is 5 is set with a transparency level of 2.) | <p style="position: absolute; left: 100; top: 200; width: 300; height: 28; text-align: center; border-style: solid; border-color=#0000FF"; **transparency: 2>** Text to display </p> |
| Enable the virtual keyboard for the alphanumeric entry fields | Enable display at a given position on screen, with the three given colors of the virtual keyboard C<FC><BC>\| XK<XX><YY><C>\| | <table style="position: absolute; left: <X>; top: <Y>; color: <FC>; background-color: <BC>"> <object type="TVML/VirtualKeyboard"> <param name="Display" value="True"> <param name="letter-color" value="<C>"> </object> </table> |

no more in the new one. The comparison and the management of the differences are preferably performed at TVML object level. TVML objects may advantageously be identified by a serial number by the Gateway and terminal 4, each therefore increasing its own object counter for the session context of the user.

It is further possible to speed up the transmission speed via back channel 4 by using mathematical compression applied by the Gateway on the TVML files. Thus, terminal 8 performs first a decompressing step on the received files before interpreting their content. As a consequence, the quantity of bytes to transmit is lessened. Such a mathematical compression may be implement by the person skilled in the art in a classical manner e.g. similarly to the Winzip® data compression software proposed by the Nico Mac Computer Ink company.

Such a mathematical compression may also be performed on the request sent by terminal 8 to the Gateway, but this is of less importance as requests are generally short.

We will now describe more in detail the manner according to which the Gateway selects either broadcast channel 7 or back channel 4 for sending the TVML pages to terminal 8.

The TVML pages which are meant for general broadcast to all DTV subscribers - such as home pages and similar which do not contain personalized data for a given subscriber - are preferably sent via broadcast channel 7. Indeed, broadcast channel 7 does not have the drawback of low transmission speed compared to back channel 4. Therefore, the Gateway preferably performs the conversion of these HTML pages from web server equipment 1 into the TVML language in a batch mode and the Proxy sends the TVML pages to broadcast server 6. However, the Gateway may also perform the conversion-to-TVML operation in real time and thus, the Proxy sends the TVML pages to broadcast server 6 also in real time.

Real-time conversion may be used where the web page includes real-time data, e.g. an order number given to the user for an article he ordered by using the interactive service. When it contains data specific to one DTV subscriber, the page is preferably sent via back channel 4. In this case, the TVML pages are sent via back channel 4.

The images - such as background images, logos and so on - which are included in the HTML pages by way of a link to a URL - are also preferably sent via broadcast channel 7, even if the corresponding TVML page itself is sent via back channel 4. Indeed, such images (JPEG, GIF, etc....) corresponds to files weighing large amounts of bytes which would slow down the interactive service if sent via back channel 4. Therefore, the Gateway may send this files via the Proxy to the broadcast server 6 in a batch mode. When converting the HTML page having the link to such an image into TVML, the Gateway converts the URL thereof into the corresponding address in broadcast channel 7. Thereby, the Browser will select this address in broadcast channel 7 when interpreting the TVML page and read there from the data file of the image for displaying it.

The Gateway may simply select either broadcast channel 7 or back channel 4 on the basis of the URL of the different HTML pages as well of the sound or image files. Therefore, a data file may be provided to the Gateway to indicate the URLs of the pages or files which are to be sent via broadcast channel 7.

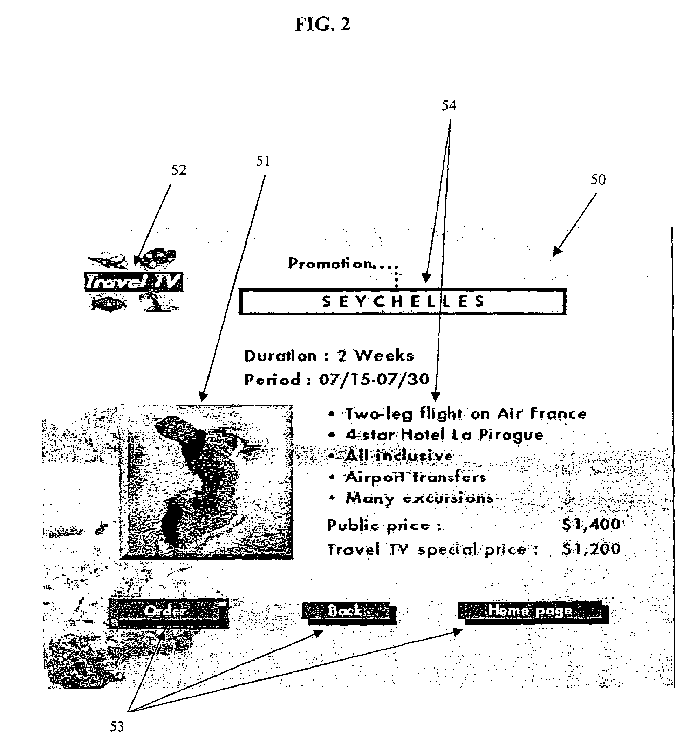

Figures 2 to 5 shows the screens displayed by an interactive service - related to travel booking - according to the described embodiment of the invention.

Figure 2 shows a first page corresponding to the detail of a travel offer. The screen comprises a background picture 50, an inlayed image 51 and a logo image 52. Each of these images correspond typically to a URL on web server equipment 1 which has been sent by the Gateway and the Proxy to broadcast channel 7 in batch mode.

The page comprises also static texts 54 and selectable buttons 53 which are coded in HTML at the web server equipment 1 and translated to TVML by the Gateway. As this screen is for general broadcast to all DTV subscribers, it is sent by the Proxy to broadcast channel 7 in batch mode.

This page displays all the information about the travel chosen by the user. The information concerning an article may be retrieved from database 1a using any web technology like ASP (*Active Server Pages from Microsoft*) and CGI (Common Gateway Interface).

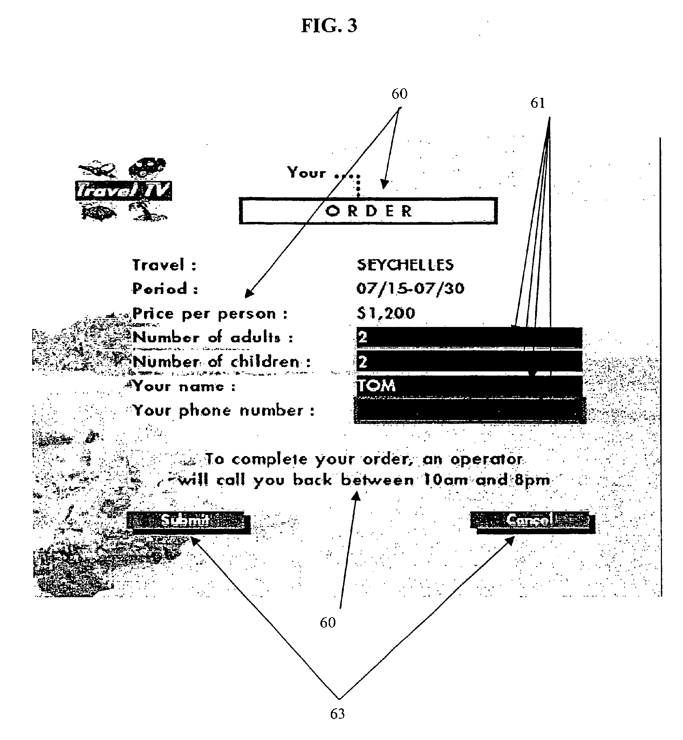

As can be seen in fig. 2, the "order" button 53 is highlighted, i.e. the focus is on it. The user can select it by the "OK" key of the remote control of terminal 8. By doing this, the Browser selects the corresponding page address. This address corresponds to a page of broadcast channel 7. Thus, the Browser reads data of the indicated channel and item address of broadcast channel 7 and displays the corresponding screen which is illustrated in fig. 3.

The screen of fig. 3 corresponds to a booking order form. It comprises texts 60 and also four entry fields 61. The user may complete the entry fields. In fig. 3, three of them were already completed by the user with "2", "2", and "TOM" respectively.

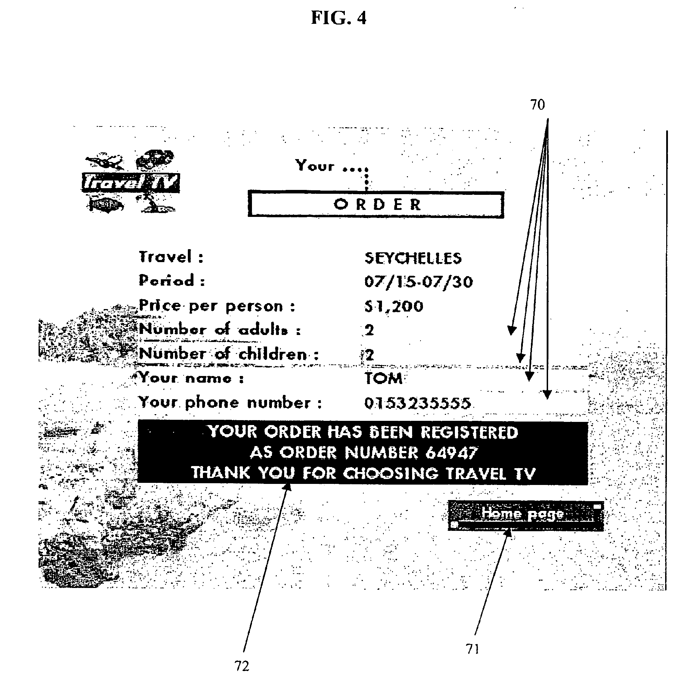

The screen further comprises two selectable buttons 63. The selection of the "Submit" button by the user with help of the remote control causes the Browser to send a request to web server equipment 1 via back channel 4 and the Gateway. The request comprises the data entered by the user into the entry fields. In response, web server equipment 1 sends an HTML web page - which is a confirmation of the order -to the Gateway which converts it to TVML in real time and sends it to terminal 8 via back channel 4. The conversion-to-TVML operation is performed in real time because the web page contains data specific to the user and which is provided in real time by web server equipment 1, i.e. an order number and the data that the user had previously entered. Upon reception, terminal 8 displays the confirmation screen which is shown in fig. 4.

To display the confirmation screen of fig. 4, the Browser left on the screen the graphic objects (e.g. the texts, icons, background image, etc.) that were already displayed in the screen of fig. 3. In other words, these objects were not deleted and again displayed. So, only the new objects were sent and processed to be displayed such as text 72. The entry fields 61 of fig. 3 have been replaced by static text 70 in fig. 4.

Of course, the data of the order entered by the user has been stored in database 1a of the web server equipment 1.

Annexes 1, 2 and 3 give a possible TVML code of the screens of fig. 2, 3 and 4 respectively. Annex 7 gives the HTML code of the screen of fig. 2 for purpose of comparison with the corresponding TVML code of Annex 1. The tags of the TVML files of annexes 1, 2 and 3 are separated from each other by a separating character which is "|". Annexes 4, 5 and 6 give a short description of the function of each tag of the TVML files of annexes 1, 2 and 3 respectively.

Table 4 indicates the size of the files of the screens of fig. 2 to 4 in HTML, in TVML and the latter when mathematically compressed with a compression algorithm which was developed for it.

**TABLE 4**

| **Screen** | **HTML size (bytes)** | **TVML size (bytes)** | **Compressed TVML size (bytes)** | **HTML to compressed TVML ratio** |
|---|---|---|---|---|
| **Detail of a travel offer -** **fig. 2** | 3563 | 354 | 282 | 8% |
| **Booking order form -** **fig. 3** | 4842 | 532 | 398 | 8% |
| **Confirmation of the booking order -** **fig. 4** | 4220 | 238 | 182 | 4% |

As can be seen in table 4, the size of the TVML files corresponds to about 10% of the size of the corresponding HTML files, and even less when mathematically compressed.

A further example of a possible TVML code is given below. It corresponds to the change of font and color settings, and the display of a centered-aligned text with a border. The code instructions are delimited by the character '|':
C10|FL|T100200C300F6_Text to display|

The code corresponds to:
- 1 st instruction: set pen and background colors
- 2nd instruction: set large text font
- 3rd instruction: create a centered-aligned text object with a blue border, at a given position.

The same example in HTML is:

```
          <p style="position: absolute; left: 100; top: 200; width: 300; height: 28;
          text-align: center; border-style: solid; border-color=#0000FF">
          Text to display
          </p>
```

However, the code for doing the same would take about 80 lines of instructions in OpenTV® and 30 lines of instructions in MediaHighway®.

The invention was described with reference to a preferred embodiment. However, many variations are possible within the scope of the invention. For instance, the person skilled in the art will understand that server 3 is not necessarily separate from web server equipment 1. Indeed, server 3 and web server 1c may e.g. correspond to only one server.

Further, the web pages of web server equipment 1 were described as being coded in HTML. Alternately, other content description language may be used such as WML (Wireless Markup Language) or XML (eXtensible Markup Language). In the case of XML, the conversion to TVML is designed for each grammar of XML to be used. Further, it is also possible to code the pages of the interactive service in a content description language which is not dedicated to the Internet. It may be e.g. the Postscript® language designed by the Adobe Systems company and which is generally dedicated to the description of documents to be printed. In this case, equipment 1 is not necessarily an Internet web server equipment. Of course, the Gateway is designed for converting the considered content description language into TVML.

It is advantageous to use a first content description language which is well known by interactive service providers such as HTML or XML because they already know these language very well. As the screens coded in these languages result in too big files that would need too much time to be transmitted via back channel 4a and interpreted by terminal 8, the invention proposes to convert them into a more compact language that we designated by TVML. However, the person skilled in the art will understand that it is also possible to design immediately the interactive services in the TVML language. In this case, the conversion-to-TVML is of course not performed by the Gateway. Nevertheless, HTML or other existing content description language are more attractive for designing the interactive service pages due to the fact that their syntax is less compact than if expressed in TVML.

Further, confidentiality of the information exchanged between the Gateway and back channel 4 may be conventionally provided by a data encryption algorithm.

A tracking server 10 may also be implemented to log user activity for example to produce statistics on the volume and characteristics of fulfilled transactions.

As some terminals are able to handle bank card or smart card transactions, using an integrated card reader, the TVML language may include tags to manage these transactions using the card reader.

### ANNEX 1: Detail of a travel offer

CB|3303_Promotion|2611C51F_SE Y C H E L L E S|C1|2622_Duration : 2 Weeks|2627_Period: 07/15-07/30|BS0307322934|CB|3934L50_• Two-leg flight on Air France
- 4-star Hotel La Pirogue
- All inclusive
- Airport transfers
- Many excursions|H5739|C1|TL35_Public price :|73R13_$1,400|J|C8| TL35_Travel TV special price :|73R13_$1,200|FS|A8?05=4{C0B| R06761704|C27|0575C17_Order} A1 {C0B|R61762204|C27|6075C23_Home page}A6{C0B|R36761404|C27|3575C14_Back}

### ANNEX 2: Booking order form

Z02020422|CB|3503_Your|2811C40F_OR D E R|H2210|C1A|TL36_Travel :|C4A|46L36 SEYCHELLES|J|C1A|TL36_Period:|C4A|46L36_07/15-07/30|J|C1A|TL36_Price per person :|C4A|46L36_$1,200|J|C1A| TL36_Number of adults :|C2B|X023646|J|C1A|TL36_Number of children :|C2B|X043646|J|C1A|TL36_Your name :|C2B|XA013646|J|C1A|TL36_Your phone number :|C2B|X033646|XU_05_4|H6214|CB|TC66_To complete your order, an operator will call you back between 10am and 8pm|A9_S {C0B| R10761904|FS|C27|0975C19_Submit|J}AB1 {C0B|R65761904|C27|6475C19 _Cancel}C6B|XK69022|

### ANNEX 3: Confirmation of the booking order

Z030311111313151517171927|H2210|J|J|C4A|46L36_$1,200|J|46L36_19|J|4 6L36_2|J|46L36_A|J|46L36_12|C2B|1058C72_YOUR ORDER HAS BEEN REGISTERED
AS ORDER NUMBER 64945
THANK YOU FOR CHOOSING TRAVEL TV|AB1 {C0B|R61762304|FS| C27|6075C23_Home page}

### ANNEX 4: Detail of a travel offer

| **Tag** | **Description** |
|---|---|
| CB\| | Pen color number 11 in palette Text at a given position Centered text with frame at given position Pen color number 1 in palette Text at a given position Text at a given position Slice picture of a given ID at a given position Pen color number 11 in palette Multi-line left-aligned text at a given position and in a given width |
| 3303_promotion\| | |
| 2611C51F_S E Y C H E L L E S\| | |
| C1\| | |
| 2622_Duration: 2 Weeks\| | |
| 2627_Period: 07/15-07/30\| | |
| BS0307322934\| | |
| | |
| CB\| | |
| 3934L50_• Two-leg flight on Air France | |
| • 4-star Hotel La Pirogue | |
| • All inclusive | |
| • Airport transfers | |
| • Many excursions\| | |
| H5739\| | Move cursor to a given position Pen color number 1 in palette Left aligned text in a given width Right-aligned text in a given width Skip one line Pen color number 8 in palette Left aligned text in a given width Right-aligned text in a given width Small font Hyper-link embedding several tags to describe the Order button Hyper-link embedding the Home page button Hyper-link embedding the Back button |
| C1\| | |
| TL35_Public price :\| | |
| 73R13_$1,400\| | |
| J\| | |
| C8\| | |
| TL35_Travel TV special price:\| | |
| 73R13_$1,200\| | |
| FS\| | |
| A8?0S=4{C0B\|R06761704\|C27\|0575C17_ | |
| Order} | |
| A1 {C0B\|R61762204\|C27\|6075C23_Home | |
| page} | |
| A6{C0B\|R36761404\|C27\|3575C14 Back} | |

### ANNEX 5: Booking order form

| **Tag** | **Description** |
|---|---|
| Z02020422\| | Suppression of a list of objects |
| CB\| | Pen color number 11 in palette |
| 3503_Your\| | Text at a given position |
| 2811C40F_O R D E R\| | Centered text with frame in a given width |
| H2210\| | Move cursor to a given position |
| C1A\| | Change pen and background colors |
| TL36_Travel :\| | Left aligned text in a given width |
| C4A\| | Change pen and background colors |
| 46L36_SEYCHELLES\| J\| | Left aligned text in a given width Skip one line |
| C1A\| | Change pen and background colors |
| TL36_Period:\| | Left aligned text in a given width |
| C4A\| | Change pen and background colors |
| 46L36_07/15-07/30\| J\| | Left-aligned text in a given width Skip one line |
| C1A\| | Change pen and background colors |
| TL36_Price per person :\| | Left-aligned text in a given width |
| C4A\| | Change pen and background colors |
| 46L36_$1,200\| J\| | Left-aligned text in a given width Skip one line |
| C1A\| | Change pen and background colors |
| TL36_Number of adults :\| | Left-aligned text in a given width |
| C2B\| | Change pen and background colors |
| X023646\| J\| | Numeric input field Skip one line |
| C1A\| | Change pen and background colors |
| TL36_Number of children :\| | Left-aligned text in a given width |
| C2B\| | Change pen and background colors |
| X043646\| J\| | Numeric input field Skip one line |
| C1A\| | Change pen and background colors |
| TL36_Your name :\| | Left-aligned text in a given width |
| C2B\| | Change pen and background colors |
| XA013646\| | Alphanumeric input field |
| J\| | Skip one line |
| C1A\| | Change pen and background colors |
| TL36_ Your phone number :\| | Left-aligned text in a given width |
| C2B\| | Change pen and background colors |
| X033646\| | Numeric input field |
| XU_05_4\| | Hidden input field to keep user context |
| H6214\| | Move cursor to a given position |
| CB\| | Pen color number 11 in palette |
| TC66_To complete your order, an operator will call you back between 10am and 8pm\| | Centered text in a given width |
| A9_S{C0B\|R10761904\|FS\|C27\|0975C19 | Submit button embedding a rectangle |
| _Submit\|J} | and the 'Submit' text |
| AB1 {C0B\|R65761904\|C27\|6475C19_Ca | Hyperlink embedding a rectangle and |
| ncel} | 'Cancel' |
| C6B\| | Change pen and background colors |
| XK69022\| | Display of virtual keyboard at a given |
| | position |

### ANNEX 6: Confirmation of the booking order

| **Tag** | **Description** |
|---|---|
| Z030311111313151517171927\| | Suppression of a list of objects |
| H2210\| | Positioning of the cursor at a position |
| J\|J\| | Skip two lines |
| C4A\| | Change pen and background colors |
| 46L36_$1,200\| | Left-aligned text in a given width |
| J\| | Skip on line |
| 46L36_19\| | Left-aligned text in a given width |
| J\| | Skip on line |
| 46L36_2\| | Left-aligned text in a given width |
| J\| | Skip on line |
| 46L36_A\| | Left-aligned text in a given width |
| J\| | Skip on line |
| 46L36_12\| | Left-aligned text in a given width |
| C2B\| | Change pen and background colors |
| 1058C72_YOUR ORDER HAS BEEN | Multi-line centered text in a given width |
| REGISTERED | |
| AS ORDER NUMBER 64945 | |
| THANK YOU FOR CHOOSING | |
| TRAVEL TV\| | |
| AB1 {C0B\|R61762304\|FS\| | Hyper-link (or button) embedding |
| C27\|6075C23_Home page} | several tags to describe a button |
| | composed of a rectangle and the text |
| | 'Home page' |

### ANNEX 7 : Detail of a travel offer

```
 <html>
 <head>
 <title>Item</title>
 <style>
 body {font-family: Canal+ Bold Romain; font-size: 18 }
 table {font-family: Canal+ Bold Romain; font-size: 18 }
 </style>
 <meta name="GENERATOR" content="Microsoft FrontPage 4.0">
 <meta name="ProgId" content="FrontPage.Editor.Document">
 </head>

 <!--
 This page displays all the information about the travel chosen by the user.
 The information concerning an article is retrieved from the database using any web
 technology (ASP, MHP, CGI, ...)
 -->

 <p:colorscheme
 colors="#0000001,#FFFFFF1,#FFFF211,#0000FF1,#3399331,#FF99001,#3366991,
 #FF00001,#C0C0C01,#FFFFFF2,#0000991,#7A52391,#969GFF 1,#FF00961,#FF00
 001"/>

 <body background="images/01.jpg" style="BACKGROUND-REPEAT=NO-
 REPEAT">

 <div>
 <img src="images/02.gif"
 style="position: absolute; left: 10; top: 10; width=112">
 <img src="images/09.gif" style="position=absolute; left=330; top=34; width=28">
 <div style=" color=#000099; font-size: 18">
 <p style="position=absolute; left=230; top=20">Promotion</p>
 <p style="position=absolute; left=180; top=65; width=360; height=28;
 border=4; border-style=solid; text-align=center; bordercolor=#000099; font-
 size=18; color=#000099">SEYCHELLES</p>
 </div>
 <div style="color: #000000; font-size: 18">
  <p style="position=absolute; left=180; top=130">Duration : 2 Weeks</p>
  <p style="position=absolute; left=180; top=160">Period : 07/15-07/30</p>
 </div>

 <!--
 Image of the travel
 -->
 <img style="position=absolute; left=48; top=192; width=202; height=202"
 src="images/03.jpg">
 <p style="position=absolute; left=270; top=205; font-size=18;
 width=350;color=#000099">
 • Two-leg flight on Air France<br>
 • 4-star Hotel La Pirogue<br>
 • All inclusive<br>
 • Airport transfers<br>
 • Many excursions</p>
 <table style="position=absolute; left=270; top=345; border: 0">
 <tr>
  <td style="position=relative; left=0; top=0;width=244">Public price :</td>
  <td style="position=relative; left=0; top=0;width: 90; text-
 align:right">$1,400</td>
 </tr>
 <tr>
  <td style="position=relative; left=0; top=0; width: 244; color=#FF0000">
   Travel TV special price :</td>
  <td style="position=relative; left=0; top=0; width: 90; color=#FF0000;
  text-align: right">
   $1,200</td>
 </tr>
 </table>

 <!--
  Navigation buttons
 -->

 <table>
 <a href="Order.asp?05=4">
 <tr>
  <td bgcolor="#000099"
  style="position=absolute;left=40;top=455; width=120; height=25"> </td>
  <td bgcolor="#336699"
  style="position=absolute;left=35;top=450; width=120; COLOR=#FFFFFF; font-
 size=16;
  text-align=center">Order</td>
 </tr>
 </a>
 </table>
 <table>
 <a href="P.htm">
 <tr>
  <td align="center" bgcolor="#000099"
  style="position=absolute; left=428; top=455; width: 160; height:
 25"> </td>
  <td align="center" bgcolor="#336699"
  style="position=absolute; left=423; top=450; width: 160; height: 25;
  color=#FFFFFF; font-size: 16">Home page</td>
 </tr>
 </a>
 </table>
 <table>
 <a href="Croisieres.asp">
 <tr>
 <td align="center" bgcolot="#000099"
 style="position=absolute;left=250;top=455; width: 100; height:
 25"> </td>
 <td align="center" bgcolor="#336699"
 style="position=absolute;left=245;top=450; width: 100; height: 25;
 color=#FFFFFF; font-size=16">Back</td>
 </tr>
 </a>
 </table>
 </div>

 </body>

 </html>
```

## Claims

1. A method for providing interactive services from server equipment (3) to a digital television set (8, 9) of a user, wherein the server equipment (3) is in two-way communication with the digital television set via a telephone network (4), the method comprising the steps of:
(a) providing the server equipment (3) with an interactive service page coded in a first content description language; the method **characterised in that** the server equipment is in at least one-way communication with the digital television set via a TV broadcast channel (7) and **in that** it comprises the steps of:
(b) converting said page into a second content description language by the server equipment (3);
(c) selecting by the server equipment one of said TV broadcast channel and said telephone network for sending said converted page; and
(d) sending said converted page by the server equipment (3) to the digital television set (8, 9) for displaying on its screen via the selected one of said TV broadcast channel and said telephone network.

2. The method according to claim 1, wherein the server equipment (3) sends said converted page via the telephone network (4) by only indicating the differences between this page and the previous page sent to the digital television set (8, 9).

3. The method according to claim 1 or 2, wherein the page contains data specific to the user, the server equipment (3) sending the page via the telephone network (4).

4. The method according to claim 3, wherein the page contains a reference to at least one image, video or sound track to be displayed or played with the page by the digital television set (8, 9), the method further comprising the step of:
- sending the image, video or sound track by the server equipment (3) to the digital television set (8, 9) via the broadcast channel (7).

5. The method according to any one of claims 1 to 4, wherein the converted page is more compact than the page coded in the first language.

6. The method according to any one of claim 1 to 5, wherein:
- in step b), the server equipment (3) converts the page coded in the first content description language into a second content description language having a more compact syntax than the first content description language;
- in step d), the server equipment sends to the digital television set the page coded in the second content description language.

7. The method according to claim 6, wherein the first content description language is HTML, WML or XML.

8. The method according to any of claims 1 to 7, wherein said page coded in the first language is provided to the server equipment (3) by a Web server (1c).

9. The method according to claim 8, further comprising the step of:
- receiving by the server equipment (3) of a request sent by the digital television set via the telephone network (4);
- sending the request to the Web server (1c) by the server equipment (3).

10. Server equipment (3) implementing the method according to any one of claims 1 to 9.

## Patentansprüche

1. Ein Verfahren zum Vorsehen von interaktiven Diensten von Serverausrüstung (3) zu einem digitalen Fernsehempfänger (8, 9) von einem Nutzer, wobei die Serverausrüstung (3) in Zwei-Weg-Kommunikation mit dem digitalen Fernsehempfänger über ein Telefonnetzwerk (4) ist, wobei das Verfahren die folgenden Schritte aufweist:
(a) Versehen der Serverausrüstung (3) mit einer interaktiven Dienstseite, die in einer ersten Inhaltsbeschreibungssprache codiert ist; das Verfahren **dadurch gekennzeichnet ist**, das die Serverausrüstung wenigstens in Ein-Weg-Kommunikation mit dem digitalen Fernsehempfänger über einen TV Ausstrahlungskanal (7) ist, und dadurch, dass es die folgenden Schritte aufweist:
(b) Konvertieren der Seite in eine zweite Inhaltsbeschreibungssprache durch die Serverausrüstung (3);
(c) Auswählen durch die Serverausrüstung von einem von dem TV Ausstrahlungskanal und dem Telefonnetzwerk zum Senden der konvertierten Seite; und
(d) Senden der konvertierten Seite durch die Serverausrüstung (3) an den digitalen Fernsehempfänger (8, 9) um sie auf seinem Bildschirm über das ausgewählte eine aus dem TV Ausstrahlungskanal und dem Telefonnetzwerk, anzuzeigen.

2. Verfahren gemäß Anspruch 1, wobei die Serverausrüstung (3) die konvertierte Seite über das Telefonnetzwerk (4) sendet, nur durch Anzeigen der Differenzen zwischen dieser Seite und der vorhergehenden Seite, die an den digitalen Fernsehempfänger (8, 9) gesendet wurde.

3. Verfahren gemäß Anspruch 1 oder 2, wobei die Seite Daten speziell für den Nutzer enthält, die Serverausrüstung (3) die Seite über das Telefonnetzwerk (4) sendet.

4. Verfahren gemäß Anspruch 3, wobei die Seite eine Referenz zu wenigstens einem Bild, Video oder Soundtrack enthält, das bzw. der mit der Seite durch den digitalen Fernsehempfänger (8, 9) anzuzeigen oder abzuspielen ist, wobei das Verfahren ferner den folgenden Schritt aufweist: Senden des Bildes, Videos oder Soundtracks durch die Serverausrüstung (3) an den digitalen Fernsehempfänger (8, 9) über den Ausstrahlungskanal (7).

5. Verfahren gemäß irgendeinem der Ansprüche 1 bis 4, wobei die konvertierte Seite kompakter ist, als die in der ersten Sprache codierte Seite.

6. Verfahren gemäß irgendeinem der Ansprüche 1 bis 5, wobei:
im Schritt b), die Serverausrüstung (3), die in der ersten Inhaltsbeschreibungssprache codierte Seite in eine zweite Inhaltsbeschreibungssprache konvertiert, die eine kompaktere Syntax als die erste Inhaltesbeschreibungssprache besitzt;
im Schritt d) die Serverausrüstung an den digitalen Fernsehempfänger, die in der zweiten Inhaltsbeschreibungssprache codierte Seite sendet.

7. Verfahren gemäß Anspruch 6, wobei die erste Inhaltsbeschreibungssprache HTML, WML oder XML ist.

8. Verfahren gemäß irgendeinem der Ansprüche 1 bis 7, wobei die in der ersten Sprache codierte Seite an die Serverausrüstung (3) durch einen Web-Server (1 c) vorgesehen ist.

9. Verfahren gemäß Anspruch 8, das ferner den folgenden Schritt aufweist:
Empfangen durch die Serverausrüstung (3) einer Anfrage, die durch die digitalen Fernsehempfänger über das Telefonnetzwerk (4) gesendet wurde;
Senden der Anfrage an den Web-Server (1c) durch die Serverausrüstung (3).

10. Serverausrüstung (3) die das Verfahren gemäß irgendeinem der Ansprüche 1 bis 9 implementiert.

## Revendications

1. Procédé pour fournir des services interactifs, à partir d'un dispositif serveur (3), à un poste de télévision numérique (8, 9) d'un utilisateur, dans lequel le dispositif serveur (3) est en communication bidirectionnelle avec le poste de télévision numérique par l'intermédiaire d'un réseau téléphonique (4), le procédé comprenant les étapes suivantes:
(a) fourniture au dispositif serveur (3) d'une page de service interactif codée dans un premier langage de description de contenu ; le procédé étant **caractérisé en ce que** le dispositif serveur est au moins en communication monodirectionnelle avec le poste de télévision numérique par l'intermédiaire d'un canal de diffusion de télévision (TV) (7) et **en ce qu'**il comprend les étapes suivantes:
(b) conversion de ladite page en un deuxième langage de description de contenu par le dispositif serveur (3) ;
(c) sélection par le dispositif serveur de l'un du canal de diffusion TV ou du réseau téléphonique pour envoyer la page convertie ; et
(d) envoi de la page convertie par le dispositif serveur (3) vers le poste de télévision numérique (8, 9) pour affichage sur son écran par l'intermédiaire de celui sélectionné du canal de diffusion TV ou du réseau téléphonique.

2. Procédé selon la revendication 1, dans lequel le dispositif serveur (3) envoie la page convertie par l'intermédiaire du réseau téléphonique (4) en indiquant uniquement les différences entre cette page et la page précédente envoyée au poste de télévision numérique (8, 9).

3. Procédé selon la revendication 1 ou 2, dans lequel la page contient des données spécifiques à l'utilisateur, le dispositif serveur (3) envoyant la page par l'intermédiaire du réseau téléphonique (4).

4. Procédé selon la revendication 3, dans lequel la page contient une référence à au moins une image, une vidéo ou une piste sonore à afficher ou à jouer par le poste de télévision numérique (8, 9) avec la page, le procédé comprenant en outre une étape d'envoi de l'image, de la vidéo ou de la piste sonore par le dispositif serveur (3) vers le poste de télévision numérique (8, 9) par l'intermédiaire du canal de diffusion (7).

5. Procédé selon l'une quelconque des revendications 1 à 4, dans lequel la page convertie est plus compacte que la page codée dans le premier langage.

6. Procédé selon l'une quelconque des revendications 1 à 5, dans lequel:
à l'étape b), le dispositif serveur (3) convertit la page codée dans le premier langage de description de contenu en un deuxième langage de description de contenu ayant une syntaxe plus compacte que le premier langage de description de contenu ;
à l'étape d), le dispositif serveur envoie au poste de télévision numérique la page codée dans le deuxième langage de description de contenu.

7. Procédé selon la revendication 6, dans lequel le premier langage de description de contenu est HTML, WML ou XML.

8. Procédé selon l'une quelconque des revendications 1 à 7, dans lequel la page codée dans le premier langage est fournie au dispositif serveur (3) par un serveur Web (1c).

9. Procédé selon la revendication 8, comprenant en outre les étapes suivantes:
réception par le dispositif serveur (3) d'une requête envoyée par le poste de télévision numérique par l'intermédiaire du réseau téléphonique (4) ;
envoi de la requête au serveur Web (1c) par le dispositif serveur (3).

10. Dispositif serveur (3) mettant en oeuvre le procédé selon l'une quelconque des revendications 1 à 9.
